# EUROPÄISCHE PATENTSCHRIFT

(11) **EP 2 066 443 B1**
(45) Veröffentlichungstag und Bekanntmachung des Hinweises auf die Patenterteilung: **05.04.2017**
(21) Anmeldenummer: 07818136.9
(22) Anmeldetag: 13.09.2007
(51) Int. Cl.: B01J 31/22, B01J 31/18, B01J 31/24, C07F 15/00

(54) **NEUE METATHESEKATALYSATOREN**
NOVEL METATHESIS CATALYSTS
NOUVEAUX CATALYSEURS DE MÉTATHÈSE

(30) Priorität: 18.09.2006 DE 102006043704
(43) Veröffentlichungstag der Anmeldung: 10.06.2009
(73) Patentinhaber: Umicore AG & Co. KG, 63457 Hanau (DE)
(72) Erfinder: ARLT, Dieter, 31737 Rinteln (DE); BIENIEK, Michal, 09-407 Plock (PL); KARCH, Ralf, 63801 Kleinostheim (DE)
(74) Vertreter: Starz, Karl Anton
(86) Internationale Anmeldenummer: PCT/EP2007/007972
(87) Internationale Veröffentlichungsnummer: WO 2008/034552

(56) Entgegenhaltungen:
- WO-A-2005/016944
- WAKAMATSU H ET AL: "A new highly efficient ruthenium metathesis catalyst" ANGEWANDTE CHEMIE, VCH VERLAGSGESELLSCHAFT, WEINHEIM, DE, Bd. 114, Nr. 13, 2002, Seiten 2509-2511, XP002278574 ISSN: 0044-8249 in der Anmeldung erwähnt
- BUJOK, R. ET AL.: "Ortho- and para-substituted Hoveyda-grubbs carbenes. An improved synthesis of highly efficient metathesis initiators" J. ORG. CHEM., Bd. 69, 2004, Seiten 6894-96, XP002463643
- BIENIEK, M. ET AL.: "Advanced fine-tuning of Grubbs/Hoveyda olefin metathesis catalysts: a further step toward an optimum balance between antinomic properties" J. AM. CHEM. SOC., Bd. 128, 4. Oktober 2006 (2006-10-04), Seiten 13652-13653, XP002463644

## Beschreibung

Die vorliegende Erfindung betrifft die neue Verbindung der Formel **1**, ihre Darstellung, Zwischenprodukte zur Darstellung und der Einsatz der Verbindungen der Formel **1** als Katalysatoren bei verschiedenen Metathesereaktionen.

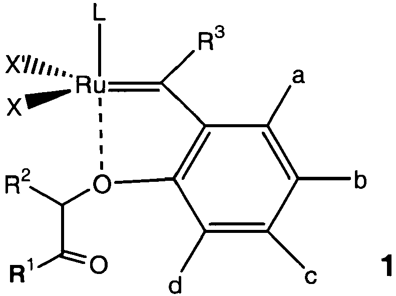

### HINTERGRUND DER ERFINDUNG

Rutheniumkomplexe der Formel **A** sind aus WO 02/14376 A2 bekannt und werden als aktive, luftstabile und zurückgewinnbaren Metathesekatalysatoren beschrieben. Es sind weiterhin Katalysatoren dieser Art bekannt geworden (Angew. Chem. 2002, 114, Nr. 5, 832-834; Angew. Chem. 2002, 114, Nr. 13, 2509-2511; Angew. Chem. 2002, 114, Nr. 21, 4210-4212), die durch die Formeln **B, C** und **D** beschrieben werden, die eine noch höhere Aktivität als **A** besitzen.

Die Verbesserung der Aktivität von **B** und **C** im Vergleich mit **A** wird auf sterische und elektronische Effekte der Substituenten am Phenylkern, im Falle von **D** auf eine spezielle Veränderung im aliphatischen Rest der Ethergruppe des Liganden zurückgeführt.

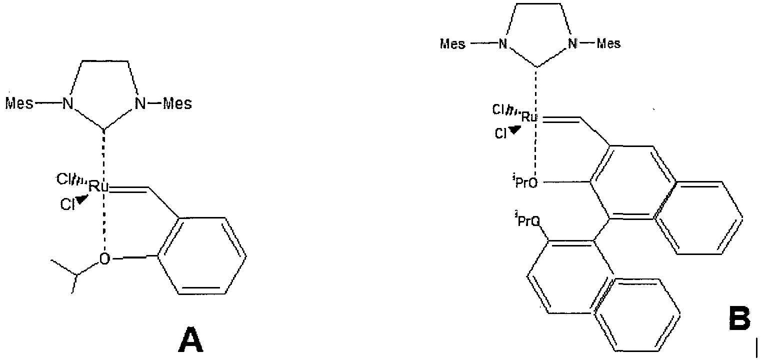

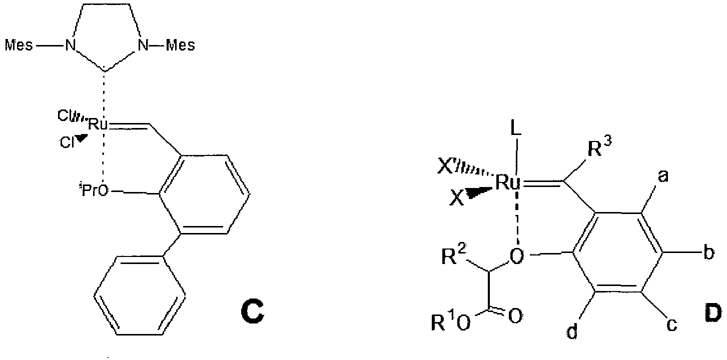

WO 2005/016944 zeigt Verbindungen der Formel D, wobei der aliphatische Rest der Ethergruppe des Liganden eine Carbonsäureestergruppe aufweist.

Es wurde nun überraschenderweise gefunden, dass eine weitere Aktivitätssteigerung von Rutheniumkatalysatoren der Formel **A,** auch im Vergleich mit **D,** durch Einführung einer Ketogruppe in den aliphatischen Rest der Ethergruppe des Liganden erreicht werden kann.

### DETAILLIERTE BESCHREIBUNG DER ERFINDUNG

Gegenstand der vorliegenden Erfindung sind neue Ruthenium-Komplexe der Formel 1 und ihre Verwendung als Metathesekatalysatoren, 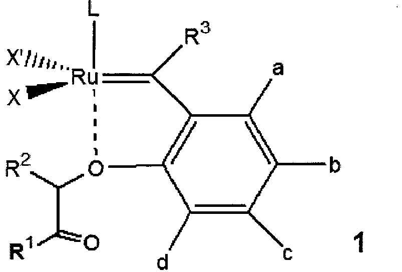 worin
- X und X': bevorzugt Halogen, besonders bevorzugt Cl oder Br;
- a, b, c, d: unabhängig voneinander H, -NO₂, C₁₋₁₂-Alkyl, C₁₋₁₂-Alkoxy oder Phenyl, wobei Phenyl gegebenenfalls mit einem Rest ausgewählt aus der Gruppe C₁₋₆-Alkyl und C₁₋₆-Alkoxy substituiert sein kann;
- R¹: C₁₋₁₂-Alkyl, C₅₋₆-Cycloalkyl, C₇₋₁₈-Aralkyl, Aryl;
- R²: H, C₁₋₁₂-Alkyl, C₅₋₆-Cycloalkyl, C₇₋₁₈-Aralkyl, Aryl;
- R³: H, C₁₋₁₂-Alkyl, C₂₋₁₂-Alkenyl, C₂₋₁₂-Alkinyl, Aryl;
bedeuten und worin
- L: P(R⁴)₃ oder einen Liganden der Formel L¹, L², L³ oder L⁴ bedeutet, worin

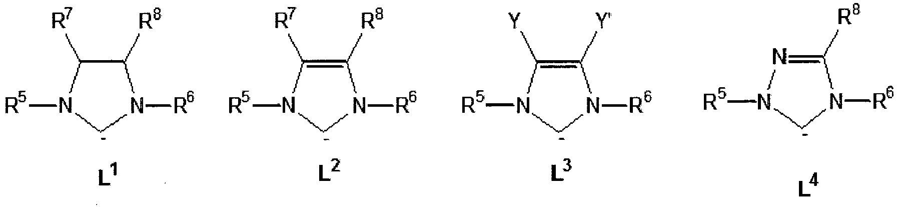

- R⁴: C₁₋₆-Alkyl, Cycloalkyl oder Aryl
- R⁵ und R⁶: unabhängig voneinander H, C₁₋₆ -Alkyl oder Aryl
- R⁷ und R⁸: unabhängig voneinander H, C₁₋₆-Alkyl, C₂₋₆-Alkenyl oder Aryl; oder
- R⁷ und R⁸: zusammen eine 3- oder 4-gliedrige Alkylenbrücke bilden; und
- Y und Y': Halogen; bevorzugt Cl oder Br
bedeutet.

Von den oben genannten Verbindungen der allgemeinen Formel **1** sind diejenigen besonders bevorzugt, in denen R¹, R², R³, X, X' und L die genannten Bedeutung haben können und
- a, b, c: H, und
- d: Phenyl mit einem Rest ausgewählt aus der Gruppe C₁₋₆-Alkyl und C₁₋₆-Alkoxy substituiert sein kann;
oder
- a, c, d: H, und
- b: -NO₂
oder
- a, b, c und d: H bedeuten.
bedeuten.

Am meisten bevorzugt sind Verbindungen der allgemeinen Formel 1, worin
- X und X': Cl;
- L: L¹;
- a, b, c, d: H;
- R¹: Methyl oder Ethyl;
- R²: H;
- R³: H;
- R⁵ und R⁶: Mesityl;
- R⁷ und R⁸: H;
bedeutet.

Die neuen Verbindungen der allgemeinen Formel **1** werden durch Umsetzung von Präliganden der Formel **2** mit Ruthenium-Komplexen der Formel **3** erhalten: 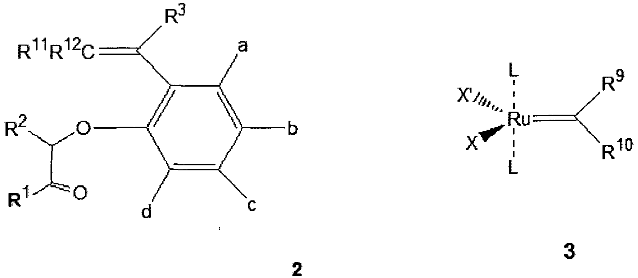 wobei in X, X', L, R¹ bis R³, a, b, c und d die in Anspruch 1 angegebene Bedeutung haben und
- R¹¹ und R¹²: unabhängig voneinander H, C₁₋₆-Alkyl, gegebenenfalls mit einem oder mehreren Halogenen substituiert, oder Aryl, gegebenenfalls mit einem oder mehreren Halogenen oder C₁₋₆-Alkyl substituiert; bevorzugt H, C₁₋₆-Alkyl oder Aryl;
- R⁹ und R¹⁰: unabhängig voneinander H, C₁₋₆-Alkyl, gegebenenfalls mit einem oder mehreren Halogenen substituiert, oder Aryl, gegebenenfalls mit einem oder mehreren Halogenen oder C₁₋₆-Alkyl substituiert; bevorzugt H, C₁₋₆-Alkyl oder Aryl;
bedeuten.

In einer bevorzugten Ausführungsform der Umsetzung werden Ruthenium-Komplexe gemäß der Formel **3** verwendet, in denen die Reste R⁹ und R¹⁰ ein Ringsystem (beispielsweise ein Indenylidensystem) ausbilden.

Deshalb ist ein weiterer Gegenstand der Erfindung eine Verbindung der Formel **2** 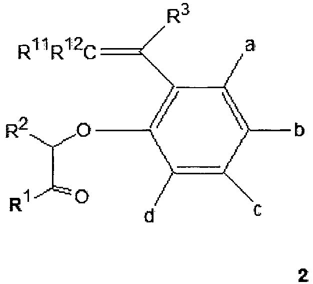 worin in einer bestimmten Ausführungsform R¹ bis R³, a, b, c und d die in Anspruch 1 angegebene Bedeutung haben; und
- R¹¹ und R¹²: unabhängig voneinander H, C₁₋₆-Alkyl, gegebenenfalls mit einem oder mehreren Halogenen substituiert, oder Aryl, gegebenenfalls mit einem oder mehreren Halogenen oder C₁₋₆-Alkyl substituiert;
bedeuten.

Bevorzugt sind hierbei die Verbindungen der Formel **2,** worin
- R¹: C₁₋₆-Alkyl, C₅₋₆-Cycloalkyl, C₇₋₁₁-Aralkyl, Aryl;
- R²: H, C₁₋₁₂-Alkyl, C₅₋₆-Cycloalkyl, C₇₋₁₁-Aralkyl, Aryl;
- R¹¹ und R¹²: unabhängig voneinander H, C₁₋₄-Alkyl, gegebenenfalls mit einem oder mehreren Halogenen substituiert, oder Aryl, gegebenenfalls mit einem oder mehreren Halogenen oder Methyl substituiert;
bedeuten.

Besonders bevorzugt sind die Verbindungen der Formel **2,** worin
- R¹: Methyl, Cyclohexyl, Benzyl, Phenyl;
- R²: H, Methyl, Cyclohexyl, Benzyl, Phenyl;
- R¹¹: H;
- R¹²: H oder Methyl;
bedeuten.

Die gezeigten Liganden und Komplexe können als reine Enantiomere oder Enantiomerenpaare auftreten. Im Rahmen der Erfindung sind deshalb zusätzlich zu etwaigen Racematen ebenfalls die reine Enantiomere enthalten, die durch das Stereozentrum die Enantiomerie während der Katalyse auf ein Substrat übertragen können.

Ein zusätzlicher Aspekt der Erfindung ist ein Verfahren zur Durchführung von Metathesereaktionen, in dem zwei Verbindungen zur Reaktion gebracht werden, die je eine olefinische Doppelbindung enthalten oder eine der Verbindungen mindestens zwei olefinische Doppelbindungen enthält und in dem als Katalysator eine der oben genannten Verbindungen der Formel **1** verwendet wird, bzw. ein Verfahren zur Durchführung einer Ringschlussmetathese (RCM) oder einer Kreuzmetathese (CM) an dem eine Verbindung, die zwei olefinische Doppelbindungen enthält, als Substrat und eine der Verbindungen der Formel **1** als Katalysator beteiligt ist.

### VERWENDETE BEGRIFFE UND DEFINITIONEN

Unter einem "anionischen Liganden" (X oder X') werden im Rahmen der Erfindung Halogene, wie Fluor, Chlor, Brom oder Jod genannt.

Unter einem "neutralen Liganden" (L) werden im Rahmen der Erfindung tertiäre Phosphine, die aliphatische, cycloaliphatische und aromatische Kohlenwasserstoffreste enthalten, wie Trioctylphosphin, Tridodecylphosphin, Tricyclohexylphosphin, Tris-(2-methylcyclohexyl)-phosphin und Tris-(o-tolyl)phosphin genannt, und als besonders bevorzugte neutrale Liganden seien NHC-Liganden durch die Formeln L¹, L², L³ und L⁴ beschriebenen Verbindungen genannt: 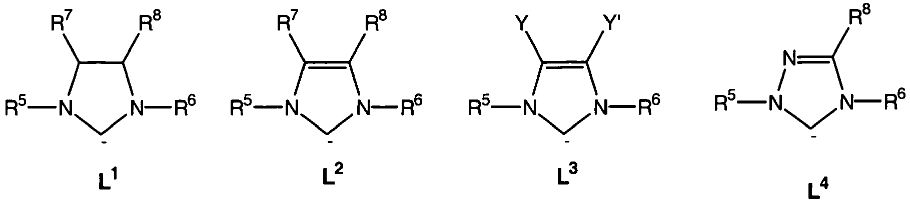 worin
- R⁵ und R⁶: unabhängig voneinander für H, C₁₋₆-Alkyl oder Aryl stehen
- R⁷ und R⁸: unabhängig voneinander für H, C₁₋₆-Alkyl, C₁₋₆-Alkenyl oder Aryl stehen oder zusammen eine 3- oder 4-gliedrige Alkylenbrücke bilden und
- Y und Y': für Halogen stehen.

Unter dem Begriff "C₁₋₁₂-Alkyl" (auch soweit sie Bestandteil anderer Reste sind) werden verzweigte und unverzweigte Alkylgruppen mit 1 bis 12 Kohlenstoffatomen verstanden, dem entsprechend werden unter dem Begriff "C₁₋₆-Alkyl" verzweigte und unverzweigte Alkylgruppen mit 1 bis 6 Kohlenstoffatomen verstanden und unter dem Begriff "C₁₋₄-Alkyl" verzweigte und unverzweigte Alkylgruppen mit 1 bis 4 Kohlenstoffatomen verstanden. Bevorzugt sind Alkylgruppen mit 1 bis 6 Kohlenstoffatomen, besonders bevorzugt 1 bis 4 Kohlenstoffatome. Beispielsweise werden hierfür genannt: Methyl, Ethyl, n-Propyl, iso-Propyl, n-Butyl, iso-Butyl, sec-Butyl, tert-Butyl, n-Pentyl, iso-Pentyl, neo-Pentyl oder Hexyl. Gegebenenfalls werden für vorstehend genannte Gruppen auch die Abkürzungen Me, Et, n-Pr, i-Pr, n-Bu, i-Bu, t-Bu, etc. verwendet. Sofern nicht anders beschrieben, umfassen die Definitionen Propyl, Butyl, Pentyl und Hexyl alle denkbaren isomeren Formen der jeweiligen Reste. So umfasst beispielsweise Propyl n-Propyl und iso-Propyl, Butyl umfasst iso-Butyl, sec-Butyl und tert-Butyl etc.

Unter dem Begriff "C₂₋₁₂-Alkenyl" (auch soweit sie Bestandteil anderer Reste sind) werden verzweigte und unverzweigte Alkenylgruppen mit 2 bis 12 Kohlenstoffatomen verstanden, soweit sie mindestens eine Doppelbindung aufweisen. Dem entsprechend werden unter dem Begriff "C₂₋₆-Alkenyl" Alkenylgruppen mit 2 bis 6 Kohlenstoffatomen verstanden und unter dem Begriff "C₂₋₄-Alkenyl" verzweigte und unverzweigte Alkenylgruppen mit 2 bis 4 Kohlenstoffatomen verstanden. Bevorzugt sind Alkenylgruppen mit 2 bis 6 Kohlenstoffatomen, besonders bevorzugt 2 bis 4 Kohlenstoffatome. Beispielsweise werden hierfür genannt: Ethenyl oder Vinyl, Propenyl, Butenyl, Pentenyl oder Hexenyl. Sofern nicht anders beschrieben, umfassen die Definitionen Propenyl, Butenyl, Pentenyl und Hexenyl alle denkbaren isomeren Formen der jeweiligen Reste. So umfasst beispielsweise Propenyl, 1- Propenyl und 2-Propenyl, Butenyl umfasst 1-, 2- und 3-Butenyl, 1-Methyl-1-propenyl, 1-Methyl-2-propenyl etc.

Unter dem Begriff "C₂₋₁₂-Alkinyl" (auch soweit sie Bestandteil anderer Reste sind) werden verzweigte und unverzweigte Alkinylgruppen mit 2 bis 12 Kohlenstoffatomen verstanden, soweit sie mindestens eine Dreifachbindung aufweisen. Dem entsprechend werden unter dem Begriff "C₂₋₆-Alkinyl" Alkinylgruppen mit 2 bis 6 Kohlenstoffatomen verstanden und unter dem Begriff "C₂₋₄-Alkinyl" verzweigte und unverzweigte Alkinylgruppen mit 2 bis 4 Kohlenstoffatomen verstanden. Bevorzugt sind Alkinylgruppen mit 2 bis 6 Kohlenstoffatomen, besonders bevorzugt 2 bis 4 Kohlenstoffatome. Beispielsweise werden hierfür genannt: Ethinyl, Propinyl, Butinyl, Pentinyl oder Hexinyl. Sofern nicht anders beschrieben, umfassen die Definitionen Propinyl, Butinyl, Pentinyl oder Hexinyl alle denkbaren isomeren Formen der jeweiligen Reste. So umfasst beispielsweise Propinyl 1-Propinyl und 2-Propinyl, Butinyl umfasst 1-, 2- und 3-Butinyl, 1-Methyl-1-propinyl, 1-Methyl-2-propinyl etc.

Unter dem Begriff "C₁₋₁₂-Alkoxy" (auch soweit sie Bestandteil anderer Reste sind) werden verzweigte und unverzweigte Alkoxygruppen mit 1 bis 12 Kohlenstoffatomen verstanden, dem entsprechend werden unter dem Begriff "C₁₋₆-Alkoxy" verzweigte und unverzweigte Alkoxygruppen mit 1 bis 6 Kohlenstoffatomen verstanden und unter dem Begriff "C₁₋₄-Alkoxy" verzweigte und unverzweigte Alkoxygruppen mit 1 bis 4 Kohlenstoffatomen verstanden. Bevorzugt sind Alkoxygruppen mit 1 bis 6 Kohlenstoffatomen, besonders bevorzugt 1 bis 4 Kohlenstoffatome. Beispielsweise werden hierfür genannt: Methoxy, Ethoxy, Propoxy, Butoxy oder Pentoxy. Gegebenenfalls werden für vorstehend genannte Gruppen auch die Abkürzungen MeO, EtO, PrO etc. verwendet. Sofern nicht anders beschrieben, umfassen die Definitionen Propoxy, Butoxy und Pentoxy alle denkbaren isomeren Formen der jeweiligen Reste. So umfasst beispielsweise Propoxy n-Porpoxy und iso-Propoxy, Butoxy umfasst iso-Butoxy, sec-Butoxy und tert-Butoxy etc.

Unter dem Begriff "C₅₋₆-Cycloalkyl" (auch soweit sie Bestandteil anderer Reste sind) werden cyclische Alkylgruppen mit 5 oder 6 Kohlenstoffatomen verstanden. Beispielsweise werden hierfür genannt: Cyclopentyl oder Cyclohexyl. Soweit nicht anders beschrieben, können die cyclischen Alkylgruppen substituiert sein mit einem oder mehreren Resten ausgewählt aus der Gruppe bestehend aus Methyl, Ethyl, iso-Propyl, tert-Butyl, Hydroxy, Fluor, Chlor, Brom und Jod.

Unter dem Begriff "Aryl" (auch soweit sie Bestandteil anderer Reste sind) werden aromatische Ringsysteme mit 6 oder 10 Kohlenstoffatomen verstanden. Beispielsweise werden hierfür genannt: Phenyl oder Naphthyl, bevorzugter Arylrest ist Phenyl. Soweit nicht anders beschrieben, können die Aromaten substituiert sein mit einem oder mehreren Resten ausgewählt aus der Gruppe bestehend aus Methyl, Ethyl, iso-Propyl, tert-Butyl, Hydoxy, Fluor, Brom und Jod.

Unter dem Begriff "C₇₋₁₈-Aralkyl" (auch soweit sie Bestandteil anderer Reste sind) werden verzweigte und unverzweigte Alkylgruppen mit 1 bis 8 Kohlenstoffatomen verstanden, die mit einem aromatischen Ringsystem mit 6 oder 10 Kohlenstoffatomen substituiert sind, entsprechend werden unter dem Begriff "C₇₋₁₁-Aralkyl" verzweigte und unverzweigte Alkylgruppen mit 1 bis 4 Kohlenstoffatomen verstanden, die mit einem aromatischen Ringsystem mit 6 Kohlenstoffatomen substituiert sind. Beispielsweise werden hierfür genannt: Benzyl, 1- oder 2-Phenylethyl. Soweit nicht anders beschrieben, können die Aromaten substituiert sein mit einem oder mehreren Resten ausgewählt aus der Gruppe bestehend aus Methyl, Ethyl, iso-Propyl, tert-Butyl, Hydroxy, Fluor, Brom und Jod.

### DARSTELLUNG DER VERBINDUNGEN

Die Umsetzung der Ruthenium-Komplexe der Formel 3 mit den Präliganden der Formel 2 wird in inerten Lösungsmitteln, z.B. CH₂Cl₂ bei ca. 0° bis 80°C ausgeführt. Vorteilhaft ist der Zusatz von CuCl zum Reaktionsgemisch. Die Reaktionspartner werden i. a. in äquivalenten Mengen eingesetzt, zur Erhöhung der Ausbeute kann aber auch die jeweils wertvollere Komponente im Unterschuss eingesetzt werden. Es kann auch zweckmäßig sein, den Komplex der Formel **3** aus anderen Rutheniumverbindungen und Ligandvorprodukten, z.B. Dihydroimidazoliniumsalzen, in situ zu erzeugen, um über die daraus entstehenden Komplexe der Formel **3** zu den neuen Metathesekatalysatoren der Formel **1** mit der jeweils gewünschten Ligandenkombination zu gelangen.

Die durch Ligandenaustauschreaktion hergestellten Metathesekatalysatoren der Formel **1** können von anderen Reaktionsprodukten, die in dem Reaktionsgemisch unlöslich sind, durch Filtration ihrer Lösung abgetrennt und nach Einengen der Lösung durch Chromatographie oder Kristallisation in reiner Form gewonnen werden. Es ist aber auch möglich, die Rohprodukte oder die in situ erzeugten Katalysatoren direkt zur Ausführung von Metathesereaktionen einzusetzen.

Die Präliganden der Formel **2** können in an sich bekannter Weise aus o-Alkenylphenolen durch Alkylierung mit α-Halogenketonen hergestellt werden.

Besonders bevorzugt ist ein neues Kombinationsverfahren, das von ggf. entsprechend substituierten Phenylallylethern ausgeht, die durch Claisen-Umlagerung und katalytische Doppelbindungsisomerisierung zu ggf. entsprechend substituierten 2-Alkenylphenolen führt, die nachfolgend durch Alkylierung mit α-Halogenketonen zu Verbindungen der Formel **2** umgesetzt werden.

Die Alkylierung von Phenolen zu Alkylphenylethern ist dem Fachmann wohlbekannt, sie wird üblicherweise in Lösungsmittel in Gegenwart basischer Stoffe durch Umsetzung mit nucleophilen Reagenzien ausgeführt. Die Umsetzung mit α-Halogenketonen verläuft besonders glatt und mit guten Ausbeuten. Als Lösungsmittel kommen z.B. Alkohole wie Ethanol oder aprotische polare Lösungsmittel wie Dimethylformamid in Frage. Die Alkylierung kann auch unter Phasentransferbedingungen ausgeführt werden. Als basische Stoffe seien Alkalicarbonate genannt, ebenso können die Alkalisalze der Zwischenprodukte, die eine freie aromatisch gebundene OH-Gruppe enthalten, für diese Umsetzung verwendet werden. Die nachfolgenden Beispiele sollen die Erfindung näher erläutern.

### BEISPIEL 1

### Herstellung des Metathesekatalysators der Formel 1a

### 1.1 Herstellung des neuen Präliganden der Formel 2a

Eine Mischung von 7,112 g (50,0 mmol) 2-Propenylphenol (E/Z-Gemisch), 7,041 g Kaliumcarbonat (50,0 mmol) und 20 ml Aceton wurden unter Rückflusskühlung 20 Minuten bei Siedetemperatur gerührt. Danach wurde eine zuvor durch Rühren über Nacht bei Raumtemperatur aktivierte Mischung von 6,94 g (75,0 mmol) Chloraceton, 0,171 g (1,0 mmol) Kaliumjodid und 6,5 ml Aceton zu der Reaktionsmischung hinzugegeben und das Reaktionsgemisch über Nacht unter Rückfluss bei Siedetemperatur gerührt. Die Reaktionsmischung wurde auf Raumtemperatur gekühlt, zu 50 ml Wasser gegeben und dreimal mit je 40 ml Diethylether extrahiert. Die organische Phase wurde mit 5%-iger Natronlauge gewaschen, abgetrennt, mit Na₂SO₄ getrocknet und eingedampft. Nach der Destillation des Rohproduktes unter vermindertem Druck erhielt man 6,788 g (Ausbeute: 67% d. Th.) 2-Propenylphenyloxymethyl-methylketon der Formel **2a:** 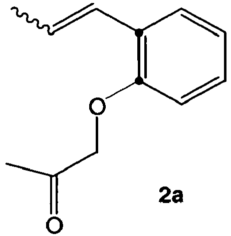 ¹H NMR (400 MHz, CDCl₃) (isomer Z): δ 1.84 (dd, 3H, *J =* 7.0, 1.8 Hz), 2.30 (s, 3H), 4.52 (s, 2H), 5.88 (dq, 1H, *J =* 11.6, 7.2 Hz), 6.61 (dq, 1H, *J =* 11.6, 1.8 Hz), 6.73 (dd, 1H, *J* = 8.2, 0.9 Hz), 6.93 - 7.02 (m, 1H), 7.18 - 7.24 (m, 1H), 7.31 (dd, 1H, *J* = 7.5, 1.7 Hz); ¹H NMR (400 MHz, CDCl₃) (isomer E): δ 1.92 (dd, 3H, *J =* 6.7, 1.8 Hz), 2.31 (s, 3H), 4.54 (s, 2H), 6.27 (dq, 1H, *J =* 15.9, 6.7 Hz), 6.68 (dd, 1H, *J* =1.1, 8.2 Hz), 6.61 (dq, 1H, *J* =15.9, 1.7Hz), 6.92 - 7.02 (m, 1H), 7.12 - 7.18 (m, 1H), 7.42 (dd, 1H, *J =* 7.6, 1.7 Hz).

### 1.2 Herstellung des Metathesekatalysators der Formel 1a

In einem Schlenkrohr wurden 62 mg (0,32 mmol) der Verbindung **2a,** 34 mg (0,34 mmol) CuCl und 12 ml Dichlormethan vorgelegt. Danach wurden 230 mg (0,27mmol) Grubbskatalysator, 2.Generation, zugegeben. Die Reaktionsmischung wurde unter Argon 20 Minuten bei Rückflusstemperatur gerührt. Das nach Filtration und Abdampfen des Lösungsmittels erhaltene Rohprodukt wurde durch Chromatographie gereinigt. (Kieselgel Merck Typ 9385, Eluent AcOEt/Cyclohexan 1:1). Es wurden 142 mg (82% d. Th.) des reinen Katalysators der Formel **1a** erhalten. 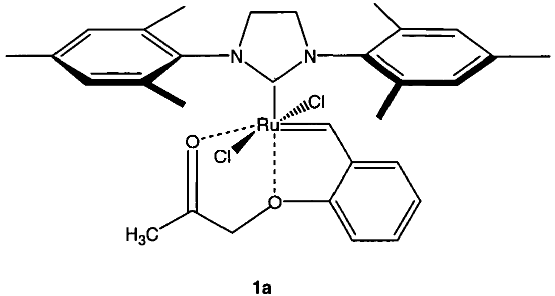 LRMS (EI): *m* / *z* = 641 (1, M⁺), 404 (1), 324 (6), 305 (22), 280 (8), 252 (2), 198 (34), 145 (7), 131 (11), 118 (100), 115 (16), 105 (9), 89 (38), 81 (10), 73 (18), 63(19), 55(22), 43 (39), 36 (30).

### BEISPIEL 2

### Herstellung des Metathesekatalysators der Formel 1b

Analog der in Beispiel 1 beschriebenen Verfahrensweise wurde durch Umsetzung von 2-Propenyl-phenol, (E/Z-Gemisch) mit Chlormethyl-ethylketon der Präligand 2-Propenylphenyloxymethyl-ethyl-keton erhalten. Die Umsetzung dieses Präliganden mit Grubbskatalysator, 2. Generation, führte in einer Ausbeute von 63 % d. Th. (Reinprodukt), zu dem Katalysator der Formel **1b**. 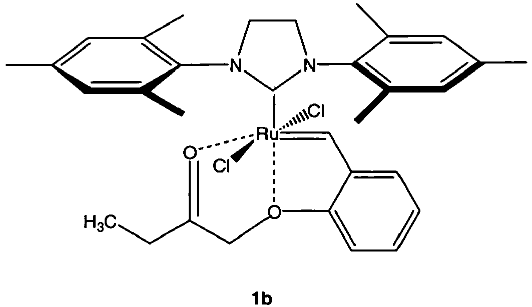 LRMS (EI): *m* / *z* = 656 (2), 654 (2, M⁺), 406 (3), 404 (3), 308 (5), 307 (23), 305 (32), 304 (62), 303 (57), 289 (12), 190 (15), 178 (16), 159 (10), 158 (18), 157 (14), 148 (28), 147 (16), 145 (10), 144 (8), 133 (21), 131 (20), 121 (16), 120 (11), 119 (25), 118 (100), 107 (19), 105 (18), 103 (11), 91 (57), 90 (38), 89 (40), 77 (18), 65 (11), 63 (20), 57 (91), 51 (13), 43 (31), 41(14), 39 (19), 36 (31); HRMS (EI): berechnet für C₃₂H₃₈O₂N₂ ³⁵Cl₂ ¹⁰²Ru (M⁺): 654.13538; gefunden 654.13790.

### VERGLEICHSBEISPIELE

### A) Kreuz-Metathese (CM) von 4-Methoxy-styrol mit (E)-1,2-Dichlorethen:

Zu Lösungen von jeweils 4-Methoxy-styrol (0,5 mmol) und (E)-1,2-Dichlorethen (1,0 mmol) in 25 ml Dichlormethan wurden jeweils 0,005 mmol des Katalysators der Formel **1a** und (als bekannte, zu vergleichende Katalysatoren) der Katalysator der Formel **D** (s. Seite 2 dieser Anmeldung), sowie Grubbs-Katalysator, 2. Generation, ebenfalls in einer Menge von jeweils 0,005 mmol als Feststoff hinzugefügt. Die Reaktionsmischung wurde jeweils 24 Stunden auf 40°C erwärmt.

Durch GC (interner Standard Nonan) wurden die folgenden Ausbeuten an Cross-Metathese-Produkt (4-Methoxy-ω-chlorstyrol) bestimmt:
Ausbeute unter Verwendung von Grubbs-Katalysator, 2. Generation: 25 % d.Th.
Ausbeute unter Verwendung des Katalysators der Formel **D :** 35 % d.Th.
Ausbeute unter Verwendung des erfindungsgemäßen Katalysators **1a :** 57 % d.Th.

### B) Vergleichende Ringschluss-Metathese (RCM) von Bis-allyl-malonsäurediethylester

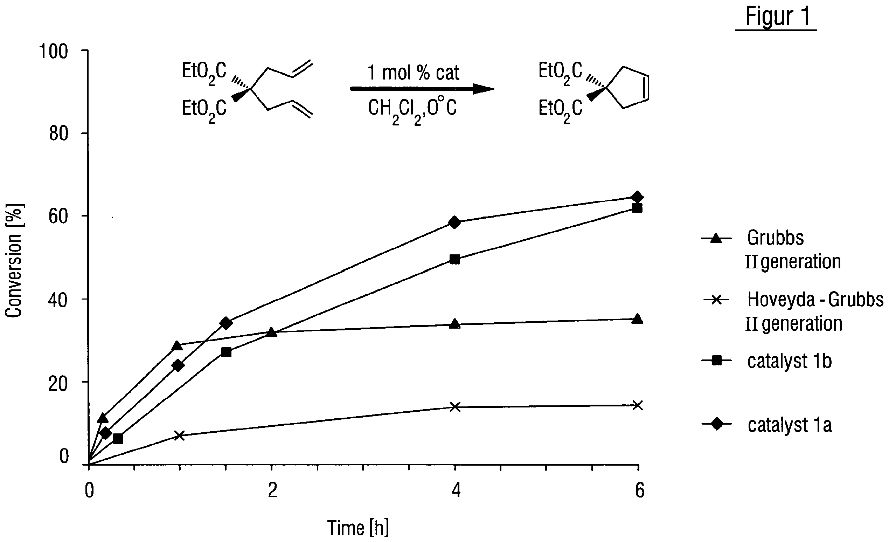

Zu Lösungen von jeweils 0,4 mmol Bis-allyl-malonsäurediethylester (Substrat) in 20 ml Dichlormethan wurde jeweils eine Lösung von 0,004 mmol der bekannten Metathesekatalysatoren (Grubbs-Katalysator, 2. Generation und Hoveyda-Grubbs-Katalysator, 2. Generation) sowie der erfindungsgemäßen Katalysatoren **1a** und **1b,** jeweils gelöst in 1 ml Dichlormethan hinzugegeben. Die gaschromatographische Untersuchung der RCM (bei 0°C) zeigte die deutlich höhere Aktivität der erfindungsgemäßen Katalysatoren **1a** und **1b,** (s. **Figur 1****).**

Die erfindungsgemäßen Katalysatoren zeichnen sich nicht nur durch überlegene Aktivität gegenüber bekannten ihrer Art aus. Sie sind zudem luft- u. lagerstabil, ein weiterer Vorteil für ihre industrielle Verwendbarkeit.

## Patentansprüche

1. Verbindungen der allgemeinen Formel **1,** worin 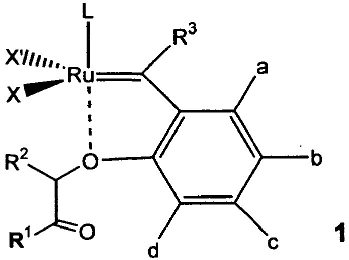
X und X' Halogen;
a, b, c, d unabhängig voneinander H, -NO₂, C₁₋₁₂-Alkyl, C₁₋₁₂-Alkoxy oder Phenyl, wobei Phenyl gegebenenfalls mit einem Rest ausgewählt aus der Gruppe C₁₋₆-Alkyl und C₁₋₆-Alkoxy substituiert sein kann;
R¹ C₁₋₁₂-Alkyl, C₅₋₆-Cycloalkyl, C₇₋₁₈-Aralkyl, Aryl;
R² H, C₁₋₁₂-Alkyl, C₅₋₆-Cycloalkyl, C₇₋₁₈-Aralkyl, Aryl;
R³ H, C₁₋₁₂-Alkyl, C₂₋₁₂-Alkenyl, C₂₋₁₂-Alkinyl, Aryl bedeuten und worin
L für einen Liganden der Formel P(R⁴)₃ steht, worin R⁴ C₁₋₆-Alkyl, Cycloalkyl oder Aryl bedeutet,
oder
L ein Ligand der Formel L¹, L², L³ oder L⁴ bedeutet, 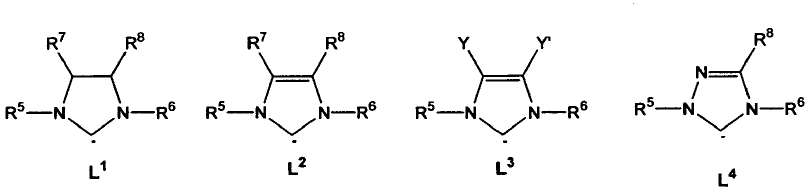
worin
R⁵ und R⁶ unabhängig voneinander H, C₁₋₆-Alkyl oder Aryl;
R⁷ und R⁸ unabhängig voneinander H. C₁₋₆-Alkyl, C₂₋₆-Alkenyl oder Aryl; oder
R⁷ und R⁸ zusammen eine 3- oder 4-gliedrige Alkylenbrücke bilden; und
Y und Y' Halogen;
bedeuten.

2. Verbindungen der allgemeinen Formel **1** nach Anspruch 1, worin
a, b, c H; und
d Phenyl, mit einem Rest ausgewählt aus der Gruppe C₁₋₆-Alkyl und C₁₋₆-Alkoxy substituiert;
bedeuten.

3. Verbindungen der allgemeinen Formel **1** nach Anspruch 1, worin
a, b, c und d H;
bedeuten.

4. Verbindung der allgemeinen Formel **1** nach Anspruch 1, worin
X und X' Cl;
L L¹;
a, b, c, d H;
R¹ Methyl;
R² H;
R³ H;
R⁵ und R⁶ Mesityl;
R⁷ und R⁸ H;
bedeutet.

5. Verbindung der allgemeinen Formel **1** nach Anspruch 1, worin
X und X' Cl;
L L¹;
a, b, c, d H;
R¹ Ethyl;
R² H;
R³ H;
R⁵ und R⁶ Mesityl;
R⁷ und R⁸ H;
bedeutet.

6. Verbindungen der Formel **2**, 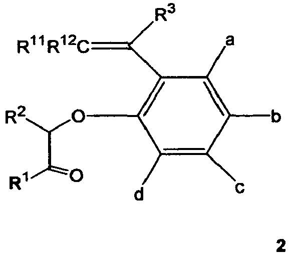
worin R¹ bis R³ und a, b, c und d die in Anspruch 1 angegebene Bedeutung haben; und
R¹¹ und R¹² unabhängig voneinander H, C₁₋₆-Alkyl, gegebenenfalls mit einem oder mehreren Halogenen substituiert, oder Aryl, gegebenenfalls mit einem oder mehreren Halogenen oder C₁₋₆-Alkyl substituiert;
bedeuten.

7. Verfahren zur Herstellung der Verbindungen der allgemeinen Formel 1 nach Anspruch 1 durch Umsetzung von Verbindungen der Formel 2 mit Ruthenium-Komplexen der Formel **3** 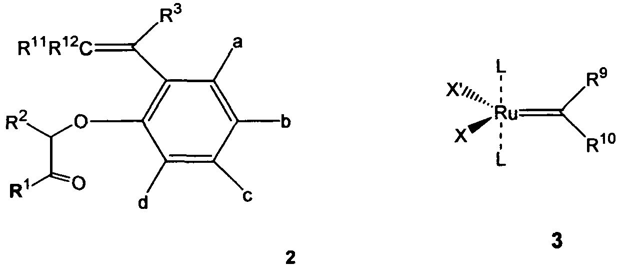 wobei
X, X', L, R¹, R², R³ sowie die Substituenten a, b, c, d die in Anspruch 1 angegebene Bedeutung haben und
R¹¹ und R¹² unabhängig voneinander H, C₁₋₆-Alkyl, gegebenenfalls mit einem oder mehreren Halogenen substituiert, oder Aryl, gegebenenfalls mit einem oder mehreren Halogenen oder C₁₋₆-Alkyl substituiert; bevorzugt H, C₁₋₆-Alkyl oder Aryl sowie
R⁹ und R¹⁰ unabhängig voneinander H, C₁₋₆-Alkyl, gegebenenfalls mit einem oder mehreren Halogenen substituiert, oder Aryl, gegebenenfalls mit einem oder mehreren Halogenen oder C₁₋₆-Alkyl substituiert; bevorzugt H, C₁₋₆-Alkyl oder Aryl;
bedeuten.

8. Verfahren nach Anspruch 7, wobei die Reste R⁹ und R¹⁰ ein Ringsystem, beispielsweise ein Indenylidensystem, ausbilden.

9. Verfahren zur Durchführung von Metathesereaktionen, in dem zwei Verbindungen zur Reaktion gebracht werden, die je eine olefinische Doppelbindung enthalten oder eine der Verbindungen mindestens zwei olefinische Doppelbindungen enthält und in dem als Katalysator eine der Verbindungen gemäß den Ansprüchen 1 bis 5 verwendet wird.

10. Verfahren zur Durchführung einer Ringschlussmetathese (RCM) oder einer Kreuzmetathese (CM) an dem eine Verbindung, die zwei olefinische Doppelbindungen enthält, als Substrat und eine der Verbindungen gemäß den Ansprüchen 1 bis 5 als Katalysator beteiligt ist.

11. Verwendung der Verbindungen gemäß einem der Ansprüche 1 bis 5 als Katalysatoren zur Metathese.

## Claims

1. Compound of general formula 1, wherein 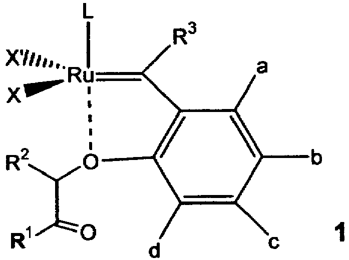
X and X' indicate halogen;
a, b, c, d, independently of one another, indicate H, -NO₂, C₁₋₁₂-alkyl, C₁₋₁₂-alkoxy, or phenyl, wherein phenyl may possibly be substituted by a substituent selected from the group C₁₋₆-alkyl and C₁₋₆-alkoxy;
R¹ indicates C₁₋₁₂-alkyl, C₅₋₆-cycloalkyl, C₇₋₁₈-aralkyl, aryl;
R² indicates H, C₁₋₁₂-alkyl, C₅₋₆-cycloalkyl, C₇₋₁₈-aralkyl, aryl;
R³ indicates H, C₁₋₁₂-alkyl, C₂₋₁₂-alkenyl, C₂₋₁₂-alkynyl, aryl,
and wherein
L stands for a ligand of the formula P(R⁴)₃, wherein R⁴ indicates C₁₋₆-alkyl, cycloalkyl, or aryl,
or
L indicates a ligand of the formula L¹, L², L³, or L⁴, 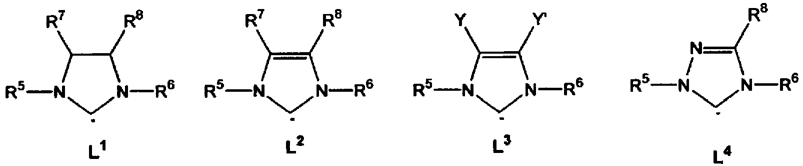 wherein
R⁵ and R⁶, independently of one another, indicate H, C₁₋₆-alkyl or aryl;
R⁷ and R⁸, independently of one another, indicate H, C₁₋₆-alkyl, C₂₋₆-alkenyl or aryl; or
R⁷ and R⁸ together form a 3- or 4-element alkylene bridge; and
Y and Y' indicate halogen.

2. Compounds of general formula 1 according to claim 1, wherein
a, b, c indicate H; and
d indicates phenyl, with a substituent selected from the group C₁₋₆-alkyl and C₁₋₆-alkoxy.

3. Compounds of general formula 1 according to claim 1, wherein a, b, c, and d indicate H.

4. Compound of general formula 1 according to claim 1, wherein
X and X' indicate Cl;
L indicates L¹;
a, b, c, d indicate H;
R¹ indicates methyl;
R² indicates H;
R³ indicates H;
R⁵ and R⁶ indicate mesityl;
R⁷ and R⁸ indicate H.

5. Compound of general formula 1 according to claim 1, wherein
X and X' indicate Cl;
L indicates L¹;
a, b, c, d indicate H;
R¹ indicates ethyl;
R² indicates H;
R³ indicates H;
R⁵ and R⁶ indicate mesityl;
R⁷ and R⁸ indicate H.

6. Compounds of formula 2, 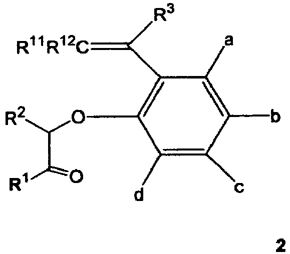
wherein R¹ through R³ and a, b, c, and d have the meaning specified in claim 1; and
R¹¹ and R¹², independently of one another, indicate H, C₁₋₆-alkyl (possibly substituted by one or more halogens) or aryl (possibly substituted by one or more halogens or C₁₋₆-alkyl).

7. Method for producing the compounds of general formula **1** according to claim 1 by means of conversion of compounds of formula **2** with ruthenium complexes of formula **3** 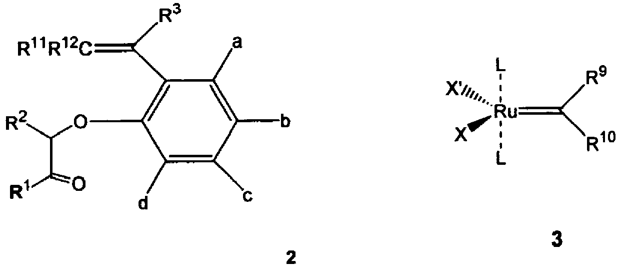 wherein
X, X', L, R¹, R², R³, as well as the substituents a, b, c, and d, have the meaning specified in claim 1, and
R¹¹ and R¹², independently of one another, indicate H, C₁₋₆-alkyl (possibly substituted by one or more halogens) or aryl (possibly substituted by one or more halogens or C₁₋₆-alkyl); preferably H, C₁₋₆-alkyl or aryl, and
R⁹ and R¹⁰, independently of one another, indicate H, C₁₋₆-alkyl (possibly substituted by one or more halogens) or aryl (possibly substituted by one or more halogens or C₁₋₆-alkyl); preferably H, C₁₋₆-alkyl or aryl.

8. Method according to claim 7, wherein the moieties R⁹ and R¹⁰ form a ring system, e.g., an indenylidene system.

9. Method for implementing metathesis reactions in which two compounds are reacted which each contain an olefinic double bond, or one of the compounds contains at least two olefinic double bonds, and in which one of the compounds according to claims 1 through 5 is used as a catalyst.

10. Method for implementing a ring closure metathesis (RCM) or a cross metathesis (CM) in which a compound that contains two olefinic double bonds participates as a substrate, and one of the compounds according to claims 1 through 5 participates as a catalyst.

11. Use of the compounds according to any of claims 1 through 5 as catalysts for metathesis.

## Revendications

1. Composé de formule générale 1, dans lequel 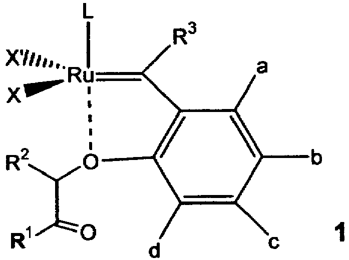
X et X' sont un halogène
a, b, c, d sont, indépendamment les uns des autres, H, -NO₂, alkyle en C₁₋₁₂, alcoxy en C₁₋₁₂ ou phényle, où le phényle peut être substitué par un radical choisi dans le groupe constitué d'un alkyle en C₁₋₆ et alcoxy en C₁₋₆ ;
R¹ est alkyle en C₁₋₁₂, cyclo-alkyle en C₅₋₆, aralkyle en C₇₋₁₈, aryle ;
R² est H, alkyle en C₁₋₁₂, cyclo-alkyle en C₅₋₆, aralkyle en C₇₋₁₈, aryle ;
R³ est H, alkyle en C₁₋₁₂, alcényle en C₂₋₁₂, alcynyle en C₂₋₁₂, aryle
et dans lequel
L représente un ligand de formule P(R⁴)₃, où R⁴ est alkyle en C₁₋₆, cyclo-alkyle ou aryle
ou
L est un ligand de formule L¹, L², L³ ou L⁴, 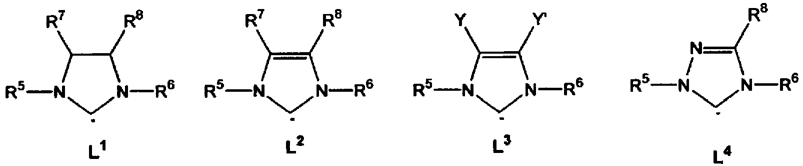 où
R⁵ et R⁶ sont, indépendamment l'un de l'autre, H, alkyle en C₁₋₆ ou aryle ;
R⁷ et R⁸ sont, indépendamment l'un de l'autre, H, alkyle en C₁₋₆, alcényle en C₂₋₆ ou aryle ; ou
R⁷ et R⁸ forment ensemble un pont alkylène à 3 ou 4 chaînions ; et
Y et Y' sont halogène.

2. Composés de formule générale 1 selon la revendication 1, dans lesquels
a, b, c sont H ; et
d est phényle, substitué avec un radical choisi dans le groupe constitué d'alkyle en C₁₋₆ et alcoxy en C₁₋₆.

3. Composés de formule générale 1 selon la revendication 1, dans lesquels
a, b, c et d sont H.

4. Composé de formule générale 1 selon la revendication 1, dans lequel
X et X' sont Cl ;
L est L¹ ;
a, b, c, d sont H ;
R¹ est le méthyle ;
R² est H ;
R³ est H ;
R⁵ et R⁶ sont le mésityle ;
R⁷ et R⁸ sont H.

5. Composé de formule générale 1 selon la revendication 1, dans lequel
X et X' sont Cl ;
L est L¹ ;
a, b, c, d sont H ;
R¹ est l'éthyle ;
R² est H ;
R³ est H ;
R⁵ et R⁶ sont le mésityle ;
R⁷ et R⁸ sont H.

6. Composés de formule 2, 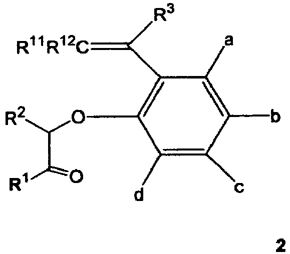
où R¹ à R³ et a, b, c et d ont la signification mentionnée dans la revendication 1 ; et
R¹¹ et R¹² sont, indépendamment l'un de l'autre, H, alkyle en C₁₋₆, le cas échéant substitué avec un ou plusieurs halogène, ou aryle, le cas échéant substitué par un ou plusieurs halogène ou alkyle en C₁₋₆.

7. Procédé de fabrication des composés de formule générale 1 selon la revendication 1 par réaction de composés de formule 2 avec des complexes de ruthénium de formule 3 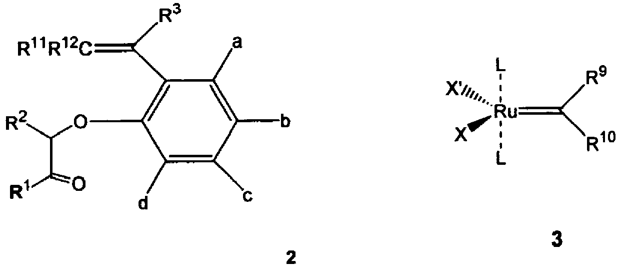 où
X, X', L, R¹, R², R³ ainsi que les substituants a, b, c, d ont la signification mentionnée dans la revendication 1 et
R¹¹ et R¹² sont, indépendamment l'un de l'autre, H, alkyle en C₁₋₆, le cas échéant substitué avec un ou plusieurs halogène, ou aryle, le cas échéant substitué par un ou plusieurs halogène ou alkyle en C₁₋₆ ; de préférence H, alkyle en C₁₋₆ ou aryle et
R⁹ et R¹⁰ sont, indépendamment l'un de l'autre, H, alkyle en C₁₋₆, le cas échéant substitué avec un ou plusieurs halogène, ou aryle, le cas échéant substitué par un ou plusieurs halogène ou alkyle en C₁₋₆ ; de préférence H, alkyle en C₁₋₆ ou aryle.

8. Procédé selon la revendication 7, dans lequel les radicaux R⁹ et R¹⁰ forment un système cyclique, par exemple un système indénylidène.

9. Procédé pour la réalisation de réactions de métathèse, dans lequel deux composés sont amenés à réagir, qui contiennent chacun une double liaison oléfinique ou un des composés contient au moins deux doubles liaisons oléfiniques et dans lequel un des composés selon les revendications 1 à 5 est utilisé comme catalyseur.

10. Procédé de réalisation d'une métathèse par cyclisation (RCM) ou une métathèse croisée (CM) dans laquelle le composé qui contient deux doubles liaisons oléfiniques est utilisé comme substrat et un des composés selon les revendications 1 à 5 est utilisé comme catalyseur.

11. Utilisation des composés selon l'une des revendications 1 à 5 comme catalyseurs pour une métathèse.
